# EUROPEAN PATENT APPLICATION

(11) **EP 3 138 823 A1**
(43) Date of publication of application: **08.03.2017**
(21) Application number: 15786769.8
(22) Date of filing: 23.04.2015
(51) Int. Cl.: C03C 17/38, B60J 1/02, B60J 1/10

(54) **VEHICLE WINDOW MEMBER WITH ATTACHED WINDOW FRAME AND METHOD FOR MANUFACTURING SAME**

(30) Priority: 28.04.2014 JP 2014093201
(71) Applicant: Asahi Glass Company, Limited, Tokyo 100-8405 (JP)
(72) Inventor: YAMAZAKI Masahiro, Tokyo 100-8405 (JP); YAMADA Daisuke, Tokyo 100-8405 (JP); INOKUMA Hisao, Tokyo 100-8405 (JP)
(74) Representative: Müller-Boré & Partner Patentanwälte PartG mbB
(86) International application number: PCT/JP2015/062349
(87) International publication number: WO 2015/166874

(57) **Abstract**

The vehicle window member with the window frame includes: the vehicle-window-use transparent plate-shaped body; the window frame made of a thermoplastic resin arranged at a region including a peripheral edge part of at least one principle surface; a functional sol-gel layer arranged at one of principle surfaces of the plate-shaped body where the window frame is arranged and between the window frame and the plate-shaped body to be partially overlapped with an arrangement region of the window frame; a primer layer arranged at substantially the same region as the arrangement region of the window frame at the plate-shaped body side of the window frame to be adjacent to the window frame; and an overcoat layer arranged between the functional sol-gel layer and the primer layer to include a region where both are overlapped, and mainly constituted of an oxide of at least one selected from Si, Ti, Zr and Zn.

## Description

### FIELD

The present invention relates to a vehicle window member with a window frame where a window frame is attached to a vehicle-window-use transparent plate-shaped body having a functional sol-gel layer, and a manufacturing method thereof.

### BACKGROUND

It has been conventionally performed to form a functional coating film at a surface of a transparent plate-shaped body made up of a glass, a transparent resin, and so on to supply various functions to a window for a vehicle. As a method to form the coating film, for example, a method is known to form a silicon oxide-based cured coating film by means of a sol-gel method whose conditions are mild using a hydrolysis and condensation reaction of a hydrolyzable silicon compound.

On the other hand, it is widely performed that a window frame made of a thermoplastic resin is provided by injection molding at a peripheral edge part of the transparent plate-shaped body so as to simplify operations to attach the vehicle-window-use transparent plate-shaped body to a vehicle main body. In this case, it is general that a primer layer is arranged between the transparent plate-shaped body and the window frame to secure adhesiveness between both (for example, refer to Patent Reference 1).

Here, when the window frame is to be similarly arranged at the transparent plate-shaped body where a functional sol-gel coating film is formed at the surface while being intervened by the primer layer, the adhesiveness between the primer layer and the sol-gel coating film is not sufficient at a region where the sol-gel coating film is formed, and there is a problem in a point that the window frame is peeled off from the transparent plate-shaped body during a manufacturing process and in use after that, or the like.

### PRIOR ART DOCUMENT

### PATENT DOCUMENT

Patent Reference 1: JP-A 2007-313937

### SUMMARY OF THE INVENTION

### PROBLEMS TO BE SOLVED BY THE INVENTION

The present invention is made from the above-stated viewpoints, and an object thereof is to provide a vehicle window member with a window frame where the window frame is arranged at a vehicle-window-use transparent plate-shaped body having a functional sol-gel layer with sufficient adhesiveness, and a manufacturing method of the vehicle window member with the window frame.

### MEANS FOR SOLVING THE PROBLEMS

The present invention provides a vehicle-window member with a window frame and a manufacturing method thereof having the following constitution.
[1] A vehicle window member with a window frame, including:
   a vehicle-window-use transparent plate-shaped body;
   a window frame made of a thermoplastic resin arranged at a region including a peripheral edge part of at least one principle surface among a plate-shaped body end part region consisting of peripheral edge parts of both principle surfaces and a side surface part of the transparent plate-shaped body;
   a functional sol-gel layer arranged at one of the principle surfaces of the transparent plate-shaped body where the window frame is arranged, so that the functional sol-gel layer is partially overlapped with the region where the window frame is arranged and an overlapped part of the functional sol-gel layer is arranged between the window frame and the transparent plate-shaped body;
   a primer layer arranged at substantially the same region as an arrangement region of the window frame at the transparent plate-shaped body side of the window frame to be adjacent to the window frame; and
   an overcoat layer mainly constituted of an oxide of at least one kind of element selected from silicon, titanium, zirconium, and zinc, and which is arranged between the functional sol-gel layer and the primer layer to include a region where both are overlapped.
[2] The vehicle window member with the window frame according to [1], wherein the oxide is an oxide formed by a hydrolysis and condensation reaction of a hydrolyzable compound of at least one kind of element selected from silicon, titanium, zirconium, and zinc.
[3] The vehicle window member with the window frame according to [2], wherein the hydrolyzable compound is a tetrafunctional hydrolyzable silicon compound and/or polysilazane.
[4] The vehicle window member with the window frame according to any one of [1] to [3], further including: a black ceramic layer arranged at the peripheral edge part of at least one principle surface of the transparent plate-shaped body to hide an inner edge of the window frame.
[5] The vehicle window member with the window frame according to any one of [1] to [4], wherein a thickness of the overcoat layer is 1 to 500 nm.
[6] A manufacturing method of the vehicle window member with the window frame according to any one of [1] to [5], including the following steps (1) to (5);
   a step (1) of forming a functional sol-gel layer at a predetermined region on at least one principle surface of the transparent plate-shaped body,
   a step (2) of forming an overcoat layer by using an overcoat layer forming composition containing a hydrolyzable compound of at least one kind of element selected from silicon, titanium, zirconium, and zinc and a solvent at an arrangement region of the overcoat layer on the functional sol-gel layer,
   a step (3) of obtaining a vehicle-window-use stack precursor by applying a primer layer forming composition containing a primer component and a solvent at an arrangement region of the primer layer including on the overcoat layer, after the step (2),
   a step (4) of obtaining a vehicle-window-use stack by heating the vehicle-window-use stack precursor, after the step (3), and
   a step (5) of arranging the window frame by injection molding at a predetermined region of the vehicle-window-use stack, after the step (4).
[7] The manufacturing method according to [6], wherein a heating temperature of the vehicle-window-use stack precursor in the step (4) is 80°C or more.

### EFFECTS OF THE INVENTION

According to the present invention, it is possible to provide a vehicle window member with a window frame where a window frame is arranged at a vehicle-window-use transparent plate-shaped body having a functional sol-gel layer with sufficient adhesiveness. According to the present invention, it is possible to provide a manufacturing method of the vehicle window member with the window frame capable of arranging the window frame at the vehicle-window-use transparent plate-shaped body having the functional sol-gel layer with sufficient adhesiveness.

### BRIEF DESCRIPTION OF THE DRAWINGS

[Fig. 1] A front view of an example of an embodiment of a vehicle window member with a window frame according to the present invention.
[Fig. 2] A sectional view along an X-X line of the vehicle window member with the window frame illustrated in Fig. 1.
[Fig. 3] A front view of another example of the embodiment of the vehicle window member with the window frame according to the present invention.
[Fig. 4] A sectional view along an X-X line of the vehicle window member with the window frame illustrated in Fig. 3.
[Fig. 5] A front view of still another example of the embodiment of the vehicle window member with the window frame according to the present invention.
[Fig. 6] A sectional view along an X-X line of the vehicle window member with the window frame illustrated in Fig. 5.

### DETAILED DESCRIPTION

Hereinafter, embodiments of the present invention are described with reference to the drawings. The present invention is not limited to these embodiments, and it is to be understood that these embodiments can be changed or modified without departing from the spirit and the scope of the invention.

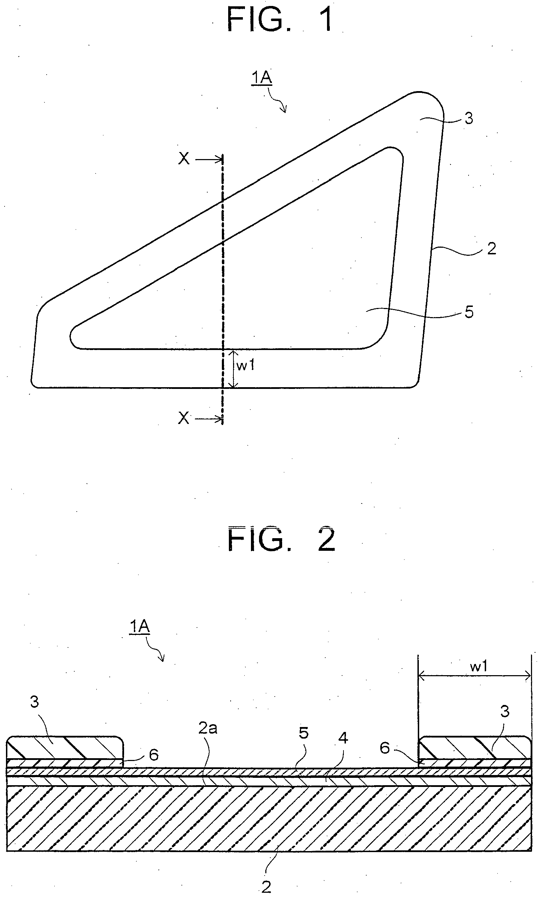

Fig. 1 is a front view of an example of an embodiment of a vehicle window member with a window frame of the present invention. Fig. 2 is a sectional view along an X-X line of the vehicle window member with the window frame illustrated in Fig. 1.

A vehicle window member with a window frame 1A illustrated in Fig. 1 and Fig. 2 has a functional sol-gel layer 4 on one principle surface 2a of a vehicle-window-use transparent plate-shaped body 2 whose shape of the principle surface is substantially trapezoid, and over a whole surface of the principle surface 2a, and has an overcoat layer 5 whose main constituent is an oxide of at least one kind of element selected from silicon, titanium, zirconium, and zinc over a whole surface on a principle surface of the functional sol-gel layer 4 which is at an opposite side of a principle surface which is in contact with the vehicle-window-use transparent plate-shaped body 2. The vehicle window member with the window frame 1A has a structure where a primer layer 6 is further held at a whole peripheral edge part on a principle surface of the overcoat layer 5 at an opposite side of a principle surface which is in contact with the functional sol-gel layer 4, and a window frame 3 made of a thermoplastic resin is arranged on the primer layer 6 where an arrangement region thereof is coincided with an arrangement region of the primer layer 6.

In the present description, the vehicle-window-use transparent plate-shaped body is just called as the plate-shaped body, and the window frame made of the thermoplastic resin is just called as the window frame according to need. In each layer stacked in the plate-shaped body, a principle surface at the plate-shaped body side is also called as a lower surface, and a principle surface at an opposite side of the lower surface is also called as an upper surface. A peripheral edge part of a certain surface means a region having a certain width from an outer periphery of the surface toward a center of the surface. Each component of the vehicle window member with the window frame 1A illustrated in Fig. 1 and Fig. 2 is described below.

### (Vehicle-Window-Use Transparent Plate-Shaped Body)

The vehicle-window-use transparent plate-shaped body 2 is not particularly limited as long as it is a transparent plate-shaped body generally used for a vehicle window. As a shape thereof, there can be cited ones in a planar-shape and a curved-shape. The shape of the principle surface is a shape of a window of a vehicle to be mounted. The plate-shaped body may be a general-purpose sheet glass, a tempered glass, a double glass, a laminated glass, and a glass with metal wire. As a material of the plate-shaped body, there can be cited a transparent glass, a resin, and so on. A thickness of the plate-shaped body is generally approximately 2.8 to 5.0 mm though it depends on a kind of a vehicle.

Specifically, there can be cited a normal soda lime glass, a borosilicate glass, a non-alkali glass, a quartz glass, and so on as the glass. It is possible to use a glass absorbing ultraviolet ray or infrared ray as the glass. Besides, there can be cited an acryl-based resin such as polymethyl methacrylate, an aromatic polycarbonate-based resin such as polyphenylene carbonate, a polystyrene resin, and so on as the resin.

### (Functional Sol-Gel Layer)

At the vehicle window member with the window frame 1A, the functional sol-gel layer 4 is arranged over the whole surface of one principle surface 2a of the plate-shaped body 2. At the vehicle window member with the window frame of the embodiment, the functional sol-gel layer is arranged at at least one principle surface of the plate-shaped body, and whose arrangement region has a part overlapped with an arrangement region of the window frame.

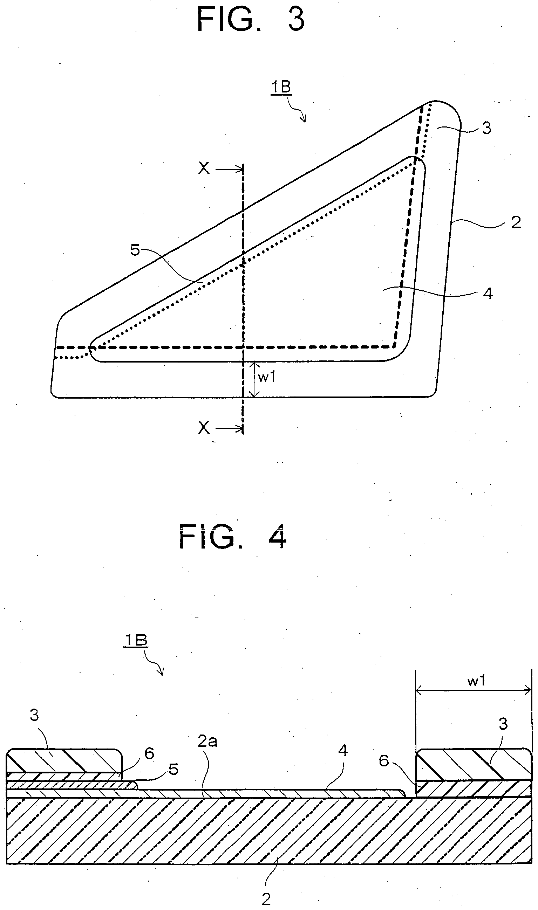

The arrangement region of the functional sol-gel layer 4 is appropriately selected by functions or the like supplied to a vehicle window by the functional sol-gel layer 4. The arrangement region of the functional sol-gel layer 4 may be the whole surface of one principle surface 2a of the plate-shaped body 2 such as the vehicle window member with the window frame 1A, or may be a part of the principle surface 2a such as a vehicle window member with a window frame 1B illustrated in later-described Fig. 3 and Fig. 4.

As the functional sol-gel layer 4, for example, there can be cited a layer obtained by curing a liquid composition to form a silicon oxide-based functional cured coating film by a sol-gel method. As the functional sol-gel layer, there can be cited an aluminum oxide-base, a titanium oxide-base, a niobium oxide-base, an iron oxide-base, a barium titanate-base, a lithium niobate-base, and so on in addition to the silicon oxide-based sol-gel layer. As the functions of the functional sol-gel layer, there can be cited ultraviolet absorption, infrared absorption, low-reflection, visible light high transmission, water repellancy, hydrophilization, conduction, coloring, and so on.

As the liquid composition (hereinafter, referred to as a "liquid composition S") to form the silicon oxide-based functional sol-gel layer, specifically, there can be cited the liquid composition S containing a hydrolyzable silicon compound, a catalyst such as an acid, and a functional component. Normally, the liquid composition is applied on a predetermined region of the plate-shaped body, heated and cured to form a coating film to make it the functional sol-gel layer.

As the hydrolyzable silicon compound contained in the liquid composition S, it is not particularly limited as long as it is a compound capable of forming a siloxane bond represented by -Si-O-Si- by hydrolysis and condensation and forming a high molecular compound which is linearly or three-dimensionally high molecularized. As the hydrolyzable silicon compound, a trifunctional or a tetrafunctional hydrolyzable silicon compound is preferable, and the tetrafunctional hydrolyzable silicon compound is particularly preferable. One kind of the hydrolyzable silicon compound may be used independently, or two kinds or more may be used together. A monofunctional or a bifunctional hydrolyzable silicon compound may be combined with the trifunctional or the tetrafunctional hydrolyzable silicon compound. Further, silica fine particles may be used in combination.

The hydrolyzable silicon compound contained in the liquid composition S may be an unreacted hydrolyzable silicon compound, a partially hydrolyzed condensate of one kind of the hydrolyzable silicon compound, or a partially hydrolyzed co-condensate of two kinds or more of the hydrolyzable silicon compounds.

As a hydrolyzable group held by the hydrolyzable silicon compound, specifically, an organooxy group such as an alkoxy group, an alkenyloxy group, an acyloxy group, an iminoxy group, an aminoxy group are preferable, and the alkoxy group is particularly preferable. As the alkoxy group, the alkoxy group having 4 or less carbon atoms, and an alkoxy-substituted alkoxy group (2-methoxyethoxy group or the like) having 4 or less carbon atoms are preferable, and a methoxy group and an ethoxy group are particularly preferable.

The tetrafunctional hydrolyzable silicon compound is a compound where four hydrolyzable groups are bonded to a silicon atom. The four hydrolyzable groups may be the same with each other or different. The hydrolyzable group is preferably the alkoxy group, more preferably the alkoxy group having 4 or less carbon atoms, and further preferably the methoxy group and the ethoxy group. As the tetrafunctional hydrolyzable silicon compound, specifically, there can be cited tetramethoxysilane, tetraethoxysilane, tetra-n-propoxysilane, tetra-n-butoxysilane, tetra-sec-butoxysilane, tetra-tert-butoxysilane, and so on. In the present invention, tetraethoxysilane, tetramethoxysilane, and so on are preferably used. One kind of these may be independently used, or two kinds or more may be used together.

The trifunctional hydrolyzable silicon compound is a compound where three hydrolyzable groups and one non-hydrolyzable group are bonded to a silicon atom. The three hydrolyzable groups may be the same with each other or different. The hydrolyzable group is preferably the alkoxy group, more preferably the alkoxy group having 4 or less carbon atoms, and further preferably the methoxy group and the ethoxy group.

As the non-hydrolyzable group, it is preferably a non-hydrolyzable monovalent organic group which has a functional group or does not have the functional group, and is more preferably the non-hydrolyzable monovalent organic group which has the functional group. The non-hydrolyzable monovalent organic group is an organic group where the organic group and the silicon atom are bonded by a carbon-silicon bond, and a bonded terminal atom is a carbon atom.

Here, the functional group used in the description is a term which inclusively indicates a group having reactivity, and being different from just a substituent, and for example, a non-reactive group such as a saturated hydrocarbon group is not included therein. Besides, an additionally polymerized unsaturated double bond (ethylenic double bond) which does not relate to a main chain formation of a high molecular compound which is held by a monomer at a side chain is one kind of the functional group. Besides, a term of "(meth)acrylic ... " such as (meth)acrylic ester is a term meaning both "acrylic" and "methacrylic".

Among the non-hydrolyzable monovalent organic group, as the non-hydrolyzable monovalent organic group which does not have the functional group, a hydrocarbon group which does not have additionally polymerized unsaturated double bond such as an alkyl group, an aryl group, and a halogenated hydrocarbon group which does not have additionally polymerized unsaturated double bond such as a halogenated alkyl group are preferable. A number of carbon atoms of the non-hydrolyzable monovalent organic group which does not have the functional group is preferably 20 or less, and more preferably 10 or less. As the monovalent organic group, the alkyl group having 4 or less carbon atoms is preferable.

As the trifunctional hydrolyzable silicon compound having the non-hydrolyzable monovalent organic group which does not have the functional group, specifically, there can be cited methyltrimethoxysilane, methyltriethoxysilane, methyltris(2-methyoxyethoxy)silane, methyltriacetoxysilane, methyltri-n-propoxysilane, methyltriisopropenoxysilane, methyltri-n-butoxysilane, ethyltrimethoxysilane, ethyltriethoxysilane, phenyltrimethoxysilane, phenyltriethoxysilane, phenyltriacethoxysilane, and so on. One kind of these may be independently used, or two kinds or more may be used together.

As the functional group in the non-hydrolyzable monovalent organic group which has the functional group, there can be cited an epoxy group, a (meth)acryloxy group, a primary or secondary amino group, an oxetanyl group, a vinyl group, a styryl group, an ureido group, a mercapto group, an isocyanate group, a cyano group, a halogen atom, and so on. Among them, the epoxy group, the (meth)acryloxy group, the primary or secondary amono group, the oxetanyl group, the vinyl group, the ureido group, the mercapto group, and so on are preferable. In particular, the epoxy group, the primary or secondary amino group, the (meth)acryloxy group are preferable. As the monovalent organic group having the epoxy group, the monovalent organic group having a glycidoxy group, a 3,4-epoxycyclohexyl group are preferable, and as the organic group having the primary or secondary amino group, the monovalent organic groups having the amino group, a monoalkylamino group, a phenylamino group, an N-(aminoalkyl)amino group, and so on are preferable.

As the trifunctional hydrolyzable silicon compound having the non-hydrolyzable monovalent organic group which has the functional group, specifically, there can be cited 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-methacryloxypropyltrimethoxysilane, di-(3-methacryloxy)propyltriethoxysilane, and so on. From a viewpoint of reactivity with a silicon compound, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane and so on are particularly preferable. One kind of these may be independently used, or two kinds or more may be used together.

As functional components contained in the liquid composition S, there can be cited flexibility components which improve a film forming ability of the silicon oxide-based sol-gel layer, and components which supply predetermined functions to the silicon oxide-based sol-gel layer such as an ultraviolet absorbent, an infrared absorbent.

As the flexibility component, for example, there can be cited various organic resins such as a silicone resin, an acrylic resin, a polyester resin, a polyurethane resin, a hydrophilic organic resin containing a polyoxyalkylene group, an epoxy resin and an organic compound such as glycerin.

As the ultraviolet absorbent, there can be cited a benzophenone-based compound, a triazine-based compound, and a benzotriazole-based compound. Note that a silyl group having the hydrolyzable group may be introduced into the compound to be used so as to prevent that these compounds bleed out of the obtained functional sol-gel layer.

As the infrared absorbent, there can be cited one or more selected from a composite tungsten oxide, an antimony-doped tin oxide (ATO), and a tin-doped indium oxide (ITO). Note that these infrared absorbents are used in a fine particle form. In this case, it is preferable that the liquid composition S contains a dispersion medium together with the infrared absorbent fine particles. Besides, when the liquid composition S contains both the ultraviolet absorbent and the infrared absorbent, it is preferable that there is contained a chelating agent which forms a complex with the infrared absorbent, and the complex does not substantially show absorption for light with a visible light wavelength.

As the catalyst contained in the liquid composition S, an acid catalyst is preferable, and specifically, there can be exemplified inorganic acids such as a nitric acid, a hydrochloric acid, a sulfuric acid, a phosphoric acid; a calboxylic acids such as a formic acid, an acetic acid, a propionic acid, a glycolic acid, an oxalic acid, a malonic acid, a succinic acid, a maleic acid, a phthalic acid, a citric acid, a malic acid; a sulfonic acids such as a methanesulfonic acid.

The liquid composition S normally contains water for hydrolysis, and an organic solvent, and according to circumstances contains a surface conditioner in addition to the above-stated each component. The organic solvent means a solvent which is compatible with water, and dissolves components such as the hydrolyzable silicon compound, film-forming component, and ultraviolet absorbent, and a dispersion medium which disperses solid particles such as the infrared absorbent, and is an organic compound which has relatively low boiling point and is in a liquid state at a room temperature. The organic solvent is made of an organic compound such as alcohol, and may be a mixture of two kinds or more.

At the vehicle window member with the window frame 1A, the functional sol-gel layer 4 is formed at the whole surface of one principle surface 2a of the plate-shaped body 2 by using the liquid composition S as stated above by, for example, a later-described manufacturing method. A thickness of the functional sol-gel layer 4 is preferably 1.0 to 8.0 µm, and more preferably 1.5 to 7.0 µm though it depends on a function thereof, a use, and so on.

### (Overcoat Layer)

At the vehicle window member with the window frame 1A, the overcoat layer 5 is arranged over a whole surface of an upper surface of the functional sol-gel layer 4. At the vehicle window member with the window frame of the embodiment, the overcoat layer is arranged such that there is included a region where at least the functional sol-gel layer and a later-described primer layer are overlapped between both.

At the vehicle window member with the window frame of the embodiment, an arrangement region of the overcoat layer may include at least a region where the functional sol-gel layer and the primer layer are overlapped. At the vehicle window member with the window frame 1A illustrated in Fig. 1 and Fig. 2, a region where the functional sol-gel layer 4 and the primer layer 6 are overlapped is only a peripheral edge part of the upper surface of the functional sol-gel layer 4, but the overcoat layer 5 is arranged at the whole surface on the functional sol-gel layer 4 which largely exceeds the peripheral edge part. The overcoat layer may be arranged at, for example, substantially the same region as the region where the functional sol-gel layer 4 and the primer layer 6 are overlapped as the vehicle window member with the window frame 1B illustrated in Fig. 3 and Fig. 4.

In the embodiment, the overcoat layer is a layer whose main constituent is an oxide of at least one kind of element selected from silicon, titanium, zirconium, and zinc. Note that the layer whose main constituent is the oxide of the element is a layer which contains the oxide of the element over 50 mass% among a constituent of the layer. The oxide of at least one kind of element selected from silicon, titanium, zirconium, and zinc may be the oxide of a single element, or may be a composite oxide where a plurality of elements and oxygen are bonded. Besides, the oxide may be made up of one kind or two kinds or more of these oxides. Note that nitrides of the above-stated elements and so on can be cited as components other than the oxides of the above-stated elements.

As the oxide contained in the overcoat layer, the oxide obtained by a hydrolysis and condensation reaction of a hydrolyzable compound of at least one kind of element selected from silicon, titanium, zirconium, and zinc is preferable. As the oxide, a silicon oxide is preferable. As the hydrolyzable compound, at least one kind selected from a group made up of the tetrafunctional hydrolyzable silicon compound and polysilazane is more preferable, and the tetrafunctional hydrolyzable silicon compound is particularly preferable.

As the hydrolyzable group or the atom held by the hydrolyzable compound, there can be cited the alkoxy group, the acyloxy group, a ketooxime group, an alkenyloxy group, the amino group, the aminoxy group, the amide group, the isocyanate group, the halogen atom, and so on.

As the hydrolyzable group or the atom which bonds to the silicon atom among them, the alkoxy group, the isocyanate group, and the halogen atom are preferable from a viewpoint of a balance between stability of an obtained compound and easiness to be hydrolyzed. As the halogen atom, a chlorine atom is preferable. As the alkoxy group, the alkoxy group having 1 to 4 carbon atoms is preferable, and the methoxy group or the ethoxy group is more preferable. As a hydrolyzable functional group or an atom which bonds to the silicon atom, the isocyanate group, the chlorine atom, the methoxy group, the ethoxy group are more preferable, and the isocyanate group is particularly preferable.

Besides, as the tetrafunctional hydrolyzable silicon compound, specifically, there can be cited tetraisocyanatesilane, tetrachlorosilane, tetramethoxysilane, tetraethoxysilane, tetra-n-propoxysilane, tetra-n-butoxysilane, and so on. In the present invention, tetraisocyanatesilane, tetrachlorosilane are particularly preferable among these hydrolyzable silicon compounds.

As the hydrolyzable group or the atom bonded to a titanium atom and a zirconium atom, the alkoxy group, the acyloxy group, and so on are preferable from the viewpoint of the balance between the stability of an obtained compound and the easiness to be hydrolyzed, and a chelate compound is also preferable as the compound. As the alkoxy group which bonds to the titanium atom, the alkoxy group having 1 to 4 carbon atoms is preferable, an isopropoxy group or an n-butoxy group is more preferable. As a tetrafunctional hydrolyzable titanium compound, specifically, there can be cited tetraisopropyltitanate, and tetra-n-butyltitanate. As the hydrolyzable group or the atom bonded to the zirconium atom, an n-propoxy group is preferable. As a hydrolyzable zirconium compound, specifically, there can be cited n-propylzirconate.

As a method forming the overcoat layer by using the hydrolyzable compound, conventionally publicly known methods, for example, the sol-gel method is used. Specifically, an overcoat layer forming composition containing the hydrolyzable compound and the solvent as essential components, and other arbitrary components, an acid as the catalyst, and so on is prepared, and thereafter, the composition is applied, dried, and cured on a formation object surface. Note that it is preferable that the overcoat layer forming composition does not contain the arbitrary component such as the surface conditioner. Here, concrete methods of the applying, the drying, the curing, and so on are explained in a later-described manufacturing method.

As the solvent used for the overcoat layer forming composition, it is not particularly limited as long as it is a solvent having good solubility for compounded components containing the above-stated hydrolyzable compound and the other arbitrary components, further which is inert for these compounded components, and specifically, there can be cited alcohols, acetic esters, ethers, ketones, water, and so on. A ratio between the solvent and the hydrolyzable compound used for the overcoat layer forming composition, a ratio where the hydrolyzable compound is 0.1 to 10 mass% relative to 100 mass% of a total amount of the solvent and the hydrolyzable compound is preferable, and 0.5 to 5 mass% is more preferable.

A thickness of the overcoat layer formed by using the overcoat layer forming composition is preferably 1 to 500 nm, and more preferably 1 to 10 nm. When the thickness of the overcoat layer is in this range, adhesiveness between the functional sol-gel layer and the primer layer is sufficiently secured.

### (Primer Layer)

At the vehicle window member with the window frame of the embodiment, the primer layer is arranged so as to sufficiently fix the window frame at the plate-shaped body. Accordingly, the primer layer is arranged at substantially the same region as a later-described arrangement region of the window frame and at the plate-shaped body side of the window frame so as to be adjacent to the window frame. In the description, a state that certain two layers are arranged at substantially the same region means a state that a ratio of an area of the arrangement region of the primer layer relative to an area of the arrangement region of the window frame is 90 to 110%, and an area of a part where the arrangement region of the window frame and the arrangement region of the primer layer are overlapped is 90% or more relative to each of the areas of the arrangement region of the window frame and the arrangement region of the primer layer when it is explained by using the primer layer and the window frame as an example.

At the vehicle window member with the window frame 1A, the window frame 3 is arranged at a whole of the peripheral edge part on one principle surface 2a of the plate-shaped body 2. At the vehicle window member with the window frame 1A, the primer layer 6 is arranged at an upper surface of the overcoat layer 5 at the plate-shaped body side of the window frame 3 in the same shape and same size with the window frame 3.

At the vehicle window member with the window frame 1A, the overcoat layer 5 is arranged at a whole surface of the upper surface of the functional sol-gel layer 4 which is arranged over the whole surface of one principle surface 2a of the plate-shaped body 2, and therefore, there is no region that the primer layer 6 is in contact with the plate-shaped body 2 and the functional sol-gel layer 4. All arrangement region of the primer layer 6 is on the overcoat layer 5, and thereby, it is possible to fix the window frame 3 at the functional sol-gel layer 4 side of the plate-shaped body 2 having the functional sol-gel layer 4 with sufficient strength.

As a material constituting the primer layer, a material similar to a material of the primer layer which is normally used to improve adhesiveness between the plate-shaped body and the window frame at a general vehicle window member with a window frame can be used without being particularly limited. Specifically, there can be cited an urethane-based resin, an amide-based resin, an acryl-based resin, a phenol-based resin, a polyester-based resin, a polyol-based resin, a silicone resin, and so on Among them, the polyester-based resin, the polyol-based resin, and so on are preferable from a viewpoint that adhesiveness particularly with the overcoat layer is good in addition to adhesiveness with the window frame.

The primer layer is obtained by applying a primer layer forming composition containing a primer component made up of the above-stated each resin, a solvent dissolving the primer component, and further arbitrary additives according to need at a predetermined region on the overcoat layer, drying according to need, and thereafter, performing heat treatment.

A thickness of the primer layer formed by using the primer layer forming composition is preferably 3 to 20 µm, and more preferably 5 to 15 µm. It is possible to sufficiently secure the adhesiveness between the overcoat layer and the window frame as long as the thickness of the primer layer is in this range.

### (Window Frame made of Thermoplastic Resin)

At the vehicle window member with the window frame 1 A, the window frame 3 is arranged at a whole of the peripheral edge part on one principle surface 2a of the plate-shaped body 2.

Here, at the vehicle window member with the window frame of the embodiment, the window frame can be arranged at a region similar to an arrangement region of a window frame at a general vehicle window member with a window frame. Specifically, the window frame is arranged at a region including a peripheral edge part of at least one principle surface among a plate-shaped body end part region consisting of peripheral edge parts of both principle surfaces and a side surface part of the plate-shaped body. Besides, the vehicle window member with the window frame is generally classified into a one-sided molding, a two-sided molding, and a three-side molding depending on the region of the plate-shaped body end part region where the window frame is arranged.

Specifically, as the vehicle window member with the window frame 1A illustrated in Fig. 1 and Fig. 2, one where the window frame is arranged only at the peripheral edge part on one principle surface of the plate-shaped body is called as the one-sided molding. One where the window frame is arranged also at the side surface of the plate-shaped body in addition to the above is called as the two-sided molding, further, one where the window frame is arranged at the peripheral edge parts on both principle surfaces and the side surface of the plate-shaped body, in other words, the window frame is arranged so as to sandwich the plate-shaped body end part is called as the three-sided molding.

As illustrated in Fig. 1, at the vehicle window member with the window frame 1A, the window frame 3 is arranged at the whole of the peripheral edge part on one principle surface 2a of the plate-shaped body 2. Here, the window frame is not necessarily provided at the whole of the peripheral edge part. The window frame may be any of one provided at the whole of the peripheral edge part, one intermittently provided at the peripheral edge part, one provided at one side or a few sides of the peripheral edge part, and so on. Further, a cross-sectional shape thereof may be formed in a flat layer state as the window frame 3 at the vehicle window member with the window frame 1 A, or may be formed in a layer state partially with concave and convex according to need. Besides, a member such as a rain gutter may be additionally provided at the window frame.

A width w1 of the window frame 3 may be generally approximately 10 to 90 mm though it depends on a size and a shape of the plate-shaped body. Note that the width may be the same over the whole of the peripheral edge part, or may be wide or narrow at a part of the peripheral edge part compared to the other parts. A thickness of the window frame 3 is preferably 5 to 30 mm, and more preferably 5 to 10 mm in consideration of workability or the like though it depends on a design or the like of the vehicle.

At the vehicle window member with the window frame of the embodiment, the window frame is made of the thermoplastic resin, and is normally formed by the injection molding. As the thermoplastic resin, one having melt viscosity capable of injecting at a relatively low temperature and low pressure, and exerting mechanical properties, cold resistance, and weather resistance required as the window frame after the injection molding, is preferably used. The thermoplastic resin having the melt viscosity of 9 Pa·s to 30 Pa·s is preferable as for the melt viscosity. Note that the melt viscosity in the description is a value measured under measurement conditions where a measurement temperature: 190°C, shear rate: 3700 s⁻¹ in accordance with JIS K 7199.

As a material of the thermoplastic resin satisfying the above-stated various conditions, there can be used polyethylene or polypropylene, and a chlorine-containing high molecular compound-based thermoplastic resin. In particular, a vinyl chloride-based resin is preferable from viewpoints of cost, wether resistance, and fluidity.

Further, a thermoplastic resin composition for injection molding is prepared by using the thermoplastic resin as stated above, the injection molding is performed according to the later-described manufacturing method, and the window frame is obtained. Normally, polyvinyl acetate or the like is contained in the thermoplastic resin composition for injection molding in addition to the above-stated thermoplastic resin.

Hereinabove, there is described the vehicle window member with the window frame 1A illustrated in Fig. 1 and Fig. 2 having the functional sol-gel layer 4 over the whole surface on one principle surface 2a of the plate-shaped body 2. Next, there is described the vehicle window member with the window frame 1B having the functional sol-gel layer 4 partially on one principle surface 2a of the plate-shaped body 2 where a front view and a sectional view are illustrated in Fig. 3 and Fig. 4 as another example of the vehicle window member with the window frame of the embodiment.

Fig. 3 and Fig. 4 respectively illustrate the front view and the sectional view along an X-X line of the vehicle window member with the window frame 1B. The vehicle window member with the window frame 1B is exactly the same as the vehicle window member with the window frame 1A except that the arrangement region of the functional sol-gel layer 4 and the arrangement region of the overcoat layer 5 are different.

As the arrangement region of the functional sol-gel layer 4 at the vehicle window member with the window frame 1B, the functional sol-gel layer 4 is arranged at the region where the peripheral edge parts along adjacent two sides other than a longest side and a shortest side constituting an outer periphery of the principle surface are excluded from a whole region of the principle surface of the plate-shaped body 2 on one principle surface 2a of the plate-shaped body 2. Note that the region where the functional sol-gel layer 4 is not arranged is larger than an arrangement region of the window frame 3 at the peripheral edge part along the same two sides. In Fig. 3, the arrangement region of the functional sol-gel layer 4 is an substantially trapezoid region surrounded by two broken lines and a line connecting two points on the outer periphery of the principle surface of the plate-shaped body where the broken lines are intersect.

Here, at the vehicle window member with the window frame 1B, a region where the arrangement region of the functional sol-gel layer 4 on the principle surface 2a of the plate-shaped body 2 and the arrangement region of the window frame 3 on the principle surface 2a of the plate-shaped body 2 are overlapped is only a part of the peripheral edge part along the longest side and the peripheral edge part along the shortest side at the outer periphery of the principle surface 2a of the plate-shaped body 2. At the vehicle window member with the window frame 1B, the overcoat layer 5 is formed at a region which includes all of the overlapped region and is a little wider than the overlapped region. In Fig. 3, the arrangement region of the overcoat layer 5 is an substantially pentagon region which is surrounded by the dotted line and the line connecting the two points on the outer periphery of the principle surface of the plate-shaped body with which the dotted line intersects. Note that an area of the arrangement region of the overcoat layer 5 is preferably about 100% to 110% of an area of the region where the arrangement regions of the functional sol-gel layer 4 and the window frame 3 are overlapped.

At the vehicle window member with the window frame 1B, the overcoat layer 5 is provided at a minimum range. It is thereby possible to eliminate an effect of the overcoat layer 5 exerted on the plate-shaped body 2 having the functional sol-gel layer 4 at the region where the window frame 3 is not arranged. Besides, it is advantageous in economical viewpoint and workability.

Note that when the window frame 3 is arranged at a region where the functional sol-gel layer 4 is not arranged on the principle surface 2a of the plate-shaped body 2, the primer layer 6 is formed on the principle surface 2a of the plate-shaped body 2, and the window frame 3 is formed thereon by the injection molding as illustrated in a sectional view at a right side in Fig. 4.

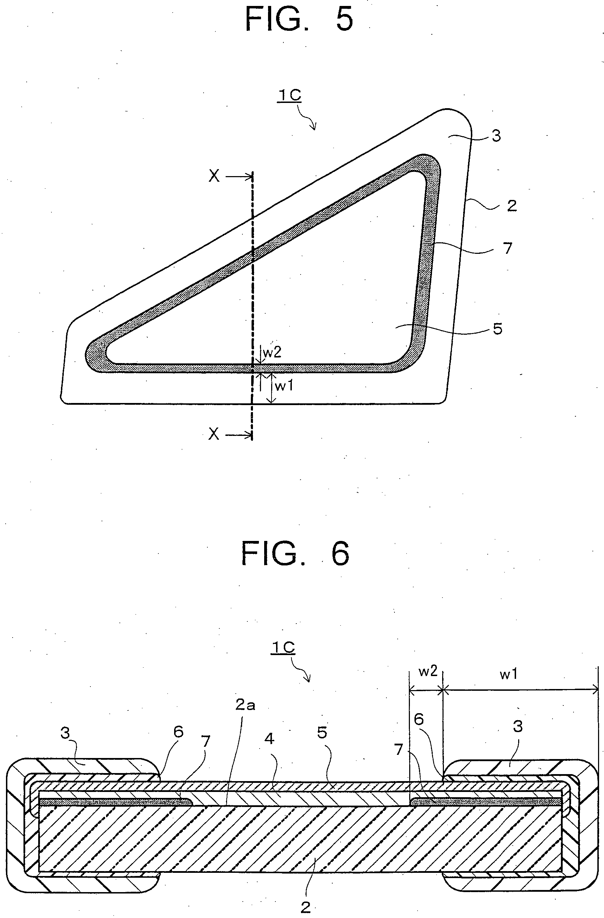

Next, there is described a vehicle window member with a window frame 1C having a black ceramic layer 7 on one principle surface 2a of the plate-shaped body 2 and the window frame 3 is arranged to be the three-sided molding, where a front view and a sectional view are respectively illustrated in Fig. 5 and Fig. 6 as still another example of the vehicle window member with the window frame of the embodiment.

Fig. 5 and Fig. 6 respectively illustrate the front view and the sectional view along an X-X line of the vehicle window member with the window frame 1C. The vehicle window member with the window frame 1C is different in points that the black ceramic layer 7 is held, and the window frame 3 is arranged to be the three-sided molding compared to the vehicle window member with the window frame 1A. The arrangement regions of the overcoat layer 5 and the primer layer 6 are therefore different, and the vehicle window member with the window frame 1C is exactly the same as the vehicle window member with the window frame 1A other than the above.

At the vehicle window member with the window frame 1C, the black ceramic layer 7 is formed in a frame state at the peripheral edge part of the upper surface of one principle surface 2a of the plate-shaped body 2 to be a little wider than a width of the arrangement region of the window frame 3. The black ceramic layer as stated above is, for example, formed in a band-shape or in a frame-shape at a part or a whole of the peripheral edge part so as to hide an adhered part when the vehicle-window-use transparent plate-shaped body is attached to the other member as a vehicle window. At the vehicle window member with the window frame 1C, the black ceramic layer 7 is provided to hide around an inner periphery of the window frame 3.

Note that the principle surface of the plate-shaped body where the black ceramic layer is arranged may be the principle surface of the plate-shaped body where the functional sol-gel layer is formed such as the vehicle window member with the window frame 1C, or may be the principle surface at an opposite side.

As a formation method of the black ceramic layer on the plate-shaped body, a conventionally publicly known method is applicable. Specifically, a black ceramic paste is prepared by adding powder of a heat-resistant black pigment such as a metal oxide being an inorganic component, powder of a low-melting point glass frit, and arbitrary components added according to need to a resin and a solvent, and kneading them. Next, the obtained black ceramic paste is applied on a predetermined position and region on at least one principle surface of a glass substrate by a screen printing or the like, it is dried according to need, and thereafter, it is heated to be baked to form the black ceramic layer.

Note that the "black" of the black ceramic layer may be adjusted such that visible light is not transmitted to a degree that at least a part which is required to be hidden can be hidden. From this viewpoint, a combination of pigments which becomes black by the combination of a plurality of colored pigments is included in the black pigment to be used. Besides, from the similar viewpoints, the black ceramic layer may be made up as an integrated film where a whole layer continues, or made up of a dot pattern or the like being an aggregate of fine dots.

A thickness of the black ceramic layer 7 is not particularly limited as long as it is in a range of no problem in visibility and adhesiveness with the functional sol-gel layer 4 formed thereon. The black ceramic layer is preferably formed with a thickness of approximately 8 to 20 µm, and more preferably 10 to 15 µm. A width of the black ceramic layer 7 is not particularly limited as long as it is a width capable of hiding around the inner periphery of the window frame 3, and a width w2 from the inner periphery of the window frame 3 to an inner periphery of the black ceramic layer 7 is preferably approximately 10 to 80 mm.

At the vehicle window member with the window frame 1C, the window frame 3 is arranged to sandwich an end part of the plate-shaped body 2. The primer layer 6 is therefore formed over a whole region which is substantially the same as the arrangement region of the window frame 3, namely, it is continuously formed at the region including the peripheral edge parts of the both principle surfaces and the side surface of the plate-shaped body 2.

Besides, at the vehicle window member with the window frame 1C, the overcoat layer 5 is formed to cover both end parts of the functional sol-gel layer 4 such that there is no place where the primer layer 6 is not in contact with the functional sol-gel layer 4.

Hereinabove, the embodiments of the present invention are described while using the vehicle window members each with the window frame 1A to 1C illustrated in Fig. 1 to Fig. 6 as examples, but the vehicle window member with the window frame of the present invention is not limited to them. The configuration can be appropriately modified within a range not departing from the spirit of the invention or according to need.

Note that the vehicle window member with the window frame may be integrally formed with the other members. As the other members, there may be any of members which are attached to the vehicle window member with the window frame and used between the vehicle-window-use transparent plate-shaped body and a vehicle main body such as a buffer member, a surface material, an insert member such as a clip and a core material, further a resin partition member, and so on.

### [Manufacturing Method of Vehicle Window Member with Window Frame]

The vehicle window member with the window frame of the present invention can be manufactured by a manufacturing method of the present invention having, for example, the following steps of (1) to (5);
a step (1) of forming a functional sol-gel layer at a predetermined region on at least one principle surface of the transparent plate-shaped body,
a step (2) of forming an overcoat layer by using an overcoat layer forming composition containing a hydrolyzable compound of at least one kind of element selected from silicon, titanium, zirconium, and zinc and a solvent at an arrangement region of the overcoat layer on the functional sol-gel layer,
a step (3) of obtaining a vehicle-window-use stack precursor by applying a primer layer forming composition containing a primer component and a solvent at an arrangement region of the primer layer including on the overcoat layer, after the step (2),
a step (4) of obtaining a vehicle-window-use stack by heating the vehicle-window-use stack precursor, after the step (3), and
a step (5) of arranging the window frame by injection molding at a predetermined region of the vehicle-window-use stack, after the step (4).

Hereinafter, each step is described.

### (1) Functional Sol-Gel Layer Forming Step

To form the functional sol-gel layer at the predetermined region of the vehicle-window-use transparent plate-shaped body, for example, a liquid composition containing the above-stated hydrolyzable compound is prepared, the liquid composition is applied at the predetermined region of a functional sol-gel layer formation surface of the vehicle-window-use transparent plate-shaped body to form an applied film, volatile components such as an organic solvent and water are removed from the obtained applied film according to need, further it is heated to a temperature where the hydrolyzable compound is cured to cure the applied film.

At first, the liquid composition is applied at the predetermined region of the functional sol-gel layer formation surface of the plate-shaped body to form the applied film of the liquid composition. Note that the applied film formed here is normally the applied film containing the above-stated volatile components such as organic solvent and water. A coating method of the liquid composition to the plate-shaped body is not particularly limited as long as it is a method capable of evenly applying, and there can be used publicly known methods such as a flow coating method, a dip coating method, a spin coating method, a spray coating method, a flexographic printing method, a screen printing method, a gravure printing method, a roll coating method, a meniscus coating method, a die coating method, and a wipe coating method. A thickness of the applied film of the coating liquid is determined in consideration of a thickness of a finally obtained functional sol-gel layer. Note that at this time, a region where the liquid composition is applied may be adjusted by performing masking or the like on the plate-shaped body according to need.

A subsequent heat treatment is performed by appropriately selecting conditions in accordance with the hydrolyzable compound. Namely, in the heating treatment, the volatile components such as the organic solvent and water are removed from the applied film of the liquid composition on the plate-shaped body according to need and when the hydrolyzable compound and the other curing component are contained, the curing component is heated to be cured to form the coating film.

In this case, the removal of the volatile components from the applied film in the heat treatment is preferably performed by heating and/or by drying under reduced pressure. After the applied film is formed on the plate-shaped body, it is preferable to perform a temporary drying under a temperature from a room temperature (approximately 23 ± 2°C) to approximately 120°C from a viewpoint of improvement in leveling characteristics of the applied film. Normally, during operation of this temporary drying, the volatile components are vaporized and removed in parallel with the temporary drying, and therefore, it can be said that the operation of the removal of the volatile components is included in the temporary drying. A time for the temporary drying, namely, a time for the operation to remove the volatile components is preferably approximately three seconds to two hours though it depends on the liquid composition used for the formation of the functional sol-gel layer.

Note that at this time, it is preferable that the volatile components are sufficiently removed, but are not necessary to be completely removed. Namely, it is possible that a part of the volatile components remains in the functional sol-gel layer in a range where performance of the finally obtained functional sol-gel layer is not affected. Besides, when the heating to remove the volatile components is performed, the heating to remove the volatile components, namely, generally the temporary drying, and the heating which is performed as described below to cure the curing component may be continuously performed subsequently when the hydrolyzable compound and the other curing component are contained.

After the volatile components are removed from the applied film as stated above, the hydrolyzable compound or the like is cured. This reaction can be performed under the room temperature to under the heating. When a cured product is generated under the heating, an upper limit of a heating temperature is preferably 200°C, and particularly preferably 190°C because an organic component is contained in the cured product. The cured product can also be generated under the room temperature, and therefore, a lower limit of the heating temperature is not particularly limited. Incidentally, when acceleration of a reaction by the heating is intended, the lower limit of the heating is preferably 60°C, and more preferably 80°C. The heating temperature is therefore preferably 60 to 200°C, and more preferably 80 to 190°C. A heating time is preferably a few minutes to a few hours though it depends on the liquid composition used for forming the functional sol-gel layer.

### (2) Overcoat Layer Forming Step

Next, the overcoat layer is formed by using the overcoat layer forming composition containing the hydrolyzable compound of at least one kind of element selected from silicon, titanium, zirconium, and zinc and the solvent at the above-described formation region of the overcoat layer including a stacked region where the primer layer and the window frame are stacked, specifically, at a region including at least a whole region of the stacked region on the functional sol-gel layer of the plate-shaped body having the functional sol-gel layer obtained by the step (1).

The region where the overcoat layer is formed and the overcoat layer forming composition are as stated above. The overcoat layer forming composition is applied at the predetermined region of the plate-shaped body having the functional sol-gel layer and reacted, and thereby, the overcoat layer is obtained.

A method to apply the overcoat layer forming composition at the predetermined region of the plate-shaped body having the functional sol-gel layer is not particularly limited. There can be cited the publicly known methods similar to the applying of the liquid composition in case of the functional sol-gel layer. Note that in this case, the region where the overcoat layer forming composition is applied may be adjusted by performing masking or the like on the plate-shaped body having the functional sol-gel layer according to need. An applying thickness of the overcoat layer forming composition is set to the thickness such that the thickness of the overcoat layer which is finally obtained by a reaction of reaction components in the composition is in the above-stated range.

After the overcoat layer forming composition is applied on the plate-shaped body having the functional sol-gel layer, the solvent is removed by drying according to need, the reaction components are reacted under conditions in accordance with the used reaction components to be the overcoat layer. As conditions to remove the solvent by the drying, specifically, there can be cited from the room temperature to 200°C, for 30 seconds to 20 minutes. Besides, there can be cited from 25 to 100°C, for 30 seconds to five minutes as the reaction conditions of the overcoat layer forming composition though it depends on the reaction components.

After that, it is preferable that a surface of the overcoat layer is wiped with water before the primer layer applying step. The curing of the overcoat layer is thereby more accelerated, and workability of the next step becomes good.

### (3) Primer Layer Applying Step

After the step (2), the primer layer forming composition containing the primer component and the solvent is applied at the arrangement region of the primer layer including on the overcoat layer to obtain the vehicle-window-use stack precursor.

The region where the primer layer is formed and the primer layer forming composition are as stated above. The primer layer forming composition is applied at the predetermined region of the plate-shaped body having the overcoat layer and the functional sol-gel layer and reacted, to thereby obtain the vehicle-window-use stack precursor.

A method to apply the primer layer forming composition at the predetermined region of the plate-shaped body having the overcoat layer and the functional sol-gel layer is not particularly limited. There can be cited the publicly known methods similar to the applying of the liquid composition in case of the functional sol-gel layer. Note that in this case, the region where the primer layer forming composition is applied may be adjusted by performing masking or the like on the plate-shaped body having the overcoat layer and the functional sol-gel layer according to need. An applying thickness of the primer layer forming composition is set to a thickness such that a thickness of a finally obtained primer layer is in the above-stated range.

### (4) Heating Step

After the step (3), the vehicle-window-use stack precursor is heated to obtain the vehicle-window-use stack. Specifically, the solvent is removed by drying according to need from the vehicle-window-use stack precursor, and thereafter, the reaction components are reacted under the conditions in accordance with the used reaction components to obtain the primer layer and make it the vehicle-window-use stack. As the conditions to remove the solvent by the drying, specifically, there can be cited from the room temperature to 200°C, for 30 seconds to 20 minutes. Besides, the reaction conditions in the primer layer forming composition depend on the reaction components. For example, when the primer layer forming composition containing the polyester-based resin is used, there can be cited 40°C or more, for 1 to 10 minutes. Note that an upper limit of a reaction temperature is preferably approximately 120°C. The reaction may be performed simultaneously with the drying according to need.

### (5) Injection Molding Step

After the step (4), the window frame is arranged at the predetermined region of the vehicle-window-use stack by the injection molding. The region where the window frame is arranged by the injection molding and the thermoplastic resin composition used for the injection molding are as stated above.

Preparation of the thermoplastic resin composition is performed such that each component contained in the composition has an even composition as a whole by mixing and kneading. A device used for mixing the thermoplastic resin composition may be any device as long as substantially uniform mixing is possible, and there can be used, for example, a ribbon blender, a Henschel mixer, a planetary mixer, and so on. Besides, a device used for kneading the thermoplastic resin composition may be any device as long as substantially uniform kneading is possible, and there can be used a device capable of kneading under mechanical shear force while heating, for example, a roll mixer, a Banbury mixer, a kneader, an extruder, and so on. The obtained thermoplastic resin composition is shaped in a pellet state by an extrusion pelletizer or the like. Further, this pellet is melted, injection molded, and thereby, the window frame is obtained.

### EXAMPLES

Hereinafter, the present invention is concretely described while citing examples, though the present invention is not limited to these examples.

Commercial products (brand name) used in the following examples are as follows.

Nonpole PMA-50W: manufactured by NOF Corporation, 44.0 mass% aqueous solution of polymaleic acid with a molecular weight: 1200, hereinafter, it is appropriately abbreviated as "PMA-50W". It is used as a chelating agent.
SR-SEP: manufactured by Sakamoto Yakuhin Kogyo Co., Ltd., sorbitol-based polyglycidylether.
Solmix AP-1: manufactured by Japan Alcohol Trading Co., Ltd., a mixed solvent of ethanol: 2-propanol: methanol = 85.5: 13.4: 1.1 (mass ratio).
Methanol silica sol: manufactured by Nissan Chemical Industries, Ltd., colloidal silica where silica fine particles with an average primary particle diameter of 10 to 20 nm are dispersed in methanol at a solid content concentration of 30 mass%.
ITO ultra-fine particles: manufactured by Mitsubishi Materials Corporation (average primary particle diameter of 20 nm), hereinafter, it is appropriately abbreviated as "ITO".
DISPERBYK-190: manufactured by BYK Japan Corporation, 40 mass% aqueous solution of a dispersing agent with an acid value of 10 mgKOH/g, a molecular weight of 2200, hereinafter, it is appropriately abbreviated as "BYK190". It is used as a dispersing agent.

### (Preparation Example of Silylated Ultraviolet Absorbent Solution)

There were charged 49.2 g of 2,2', 4,4'-tetrahydroxybenzophenone (manufactured by BASF Corporation), 123.2 g of 3-glycidoxypropyltrimethoxysilane (manufactured by Shin-Etsu Chemical Co., Ltd.), 0.8 g of benzyltriethylammonium chloride (manufactured by Junsei Chemical Co., Ltd.), and 100 g of butyl acetate (manufactured by Junsei Chemical Co., Ltd.), heated to 60°C while stirring, dissolved, then heated to 120°C to be reacted for four hours, and thereby, a silylated ultraviolet absorbent solution with a solid content concentration of 63 mass% was obtained.

### (Preparation Example of ITO Dispersion Liquid)

There were dispersing processed 11.9 g of ITO ultra-fine particles, 3.0 g of DISPERBYK-190, and 24.2 g of Solmix AP-1 for 48 hours by using a ball mill, subsequently Solmix AP-1 was further added and they were diluted such that an ITO solid content concentration was 20 mass% to obtain an ITO dispersion liquid.

In the following explanation, a film thickness of each layer was measured by using a stylus type surface profile measuring instrument (ULVAC: Dektak3).

### <Liquid Composition 1 for forming Functional Sol-Gel Layer: Coating Solution for forming Ultraviolet Absorption Film>

There were charged 45.0 g of Solmix AP-1, 10.5 g of tetramethoxysilane, 3.5 g of 3-glycidoxypropyltrimethoxysilane, 10.2 g of the silylated ultraviolet absorbent solution obtained in the above-stated preparation example, 0.8 g of SR-SEP as polyepoxide, 1.5 g of methanol silica sol as colloidal silica, 9.9 g of acetic acid, and 18.6 g of ion-exchange water, and stirred to obtain a liquid composition 1.

### <Liquid Composition 2 for forming Functional Sol-Gel Layer: Coating Solution for forming Ultraviolet and Infrared Absorption Film>

There were charged 7.0 g of ITO dispersion liquid, 45.8 g of Solmix AP-1, 10.9 g of tetramethoxisilane, 11.7 g of silylated ultraviolet absorbent solution, 0.8 g of SR-SEP, 13.5 g of pure water, 10.3 g of acetic acid, 0.20 g of PMA-50W, and stirred to obtain a liquid composition 2.

### <Manufacturing of Glass Plate having Functional Sol-Gel Layer>

There was applied 5.0 mL of the obtained liquid composition 1 on a high heat ray absorbing green glass (Tv (visible light transmittance by JIS-R3212 (1998)): 73.7%, Tuv (ultraviolet transmittance by ISO-9050 (1990)): 10.0%, transmittance of light with a wavelength of 380 nm: 31.5%, 10 cm in length, 10 cm in width, and 3.5 mm in thickness, manufactured by Asahi Glass Co,. Ltd., common name UVFL) by the spin coating method, heated in the atmosphere at 180°C for 30 minutes, to obtain a glass plate 1 having a functional sol-gel layer which had the functional sol-gel layer (ultraviolet absorption film) with a thickness of 4.0 µm at a whole surface on one principle surface of the glass plate.

A glass plate 2 having a functional sol-gel layer which had the functional sol-gel layer (ultraviolet and infrared absorption film) with a thickness of 4.0 µm at a whole surface on one principle surface of the glass plate was obtained by replacing the liquid composition 1 to the liquid composition 2.

### [Adhesiveness Test]

A degree of improvement in adhesiveness between the functional sol-gel layer and the primer layer owing to arrangement of the overcoat layer on the functional sol-gel layer was evaluated by using the obtained glass plate 1 having the functional sol-gel layer (ultraviolet absorption film) or glass plate 2 having the functional sol-gel layer (ultraviolet and infrared absorption film). Test examples 1 to 3 were examples each having the overcoat layer, a test example 4 was an example not having the overcoat layer. Reference examples 1 to 3 were examples each testing adhesiveness between the glass plate and the primer layer when the functional sol-gel layer was not held.

### (Test Example 1: Ultraviolet Absorption Film + SiO₂ Layer)

There was dissolved tetraisocyanatesilane (manufactured by Matsumoto Fine Chemical Co., Ltd., Orgatics SI-400 (brand name)) in dehydrated butyl acetate (Kanto Chemical Co., Inc. in extra-pure grade) to be a concentration of 3 mass%, and an overcoat layer forming composition 1 was manufactured. A folded Kimwipe (registered trademark, it is the same in the following) was immersed in 1 mL of the overcoat layer forming composition 1, it was wipe-coated at a whole surface on the ultraviolet absorption film of the obtained glass plate 1 having the functional sol-gel layer, then it was dried at the room temperature (23 ± 2°C, 50 ± 10% Rh) for 3 minutes. After that, a folded Kimwipe was immersed in 1 mL of pure water, then it was wipe-coated, and there was obtained a coating film where an SiO₂ layer (thickness: approximately 1 to 2 nm) was formed at a surface of the ultraviolet absorption film as the overcoat layer.

A felt was immersed in 2 mL of the primer layer forming composition containing the polyester-based resin and applied at a whole surface on the SiO₂ layer of the coating film, it was processed at a heating temperature of 90°C, for a heating time of 1 minute, 3 minutes, and 5 minutes respectively. After the process, a cross cut test (JIS K5600-5-6 adherence (cross-cut method)) was performed within 5 minutes, a surface state thereof was observed with the naked eyes, and evaluated based on criteria below. Results thereof are illustrated in Table 2 together with a layer constitution on the glass plate. Note that a thickness of the obtained primer layer was approximately 10 µm in each of all process times. Besides, an applying amount of the primer containing the polyester-based resin was the same amount in the test examples, reference examples, and the thicknesses of the primer layers were approximately 10 µm in any case of the below.

### (Evaluation Criteria)

Surface states were evaluated by classifications Class 0 (zero) to 5 while using "JIS K5600-5-6 Table 1 classification of test results" illustrated in Table 1 as the criteria.

### (Test Example 2: Ultraviolet and Infrared Absorption Film + ZrO Layer)

There was dissolved n-propylzirconate (with propanol 26%, manufactured by Matsumoto Fine Chemical Co., Ltd., Orgatics ZA-45 (brand name)) in dehydrated butyl acetate (Kanto Chemical Co., Inc. in extra-pure grade) to be a concentration of 3 mass%, and an overcoat layer forming composition 2 was manufactured. A folded Kimwipe was immersed in 1 mL of the overcoat layer forming composition 2, it was wipe-coated at a whole surface on the ultraviolet and infrared absorption film of the obtained glass plate 2 having the functional sol-gel layer, then it was dried at the room temperature (23 ± 2°C, 50 ± 10% Rh) for 3 minutes. After that, the folded Kimwipe was immersed in 1 mL of pure water, then it was wipe-coated, and there was obtained a coating film where a ZrO layer (thickness: approximately 1 to 2 nm) was formed at a surface of the ultraviolet and infrared absorption film as the overcoat layer.

The felt was immersed in the primer layer forming composition containing the polyester-based resin as same as the test example 1 and applied at a whole surface on the ZrO layer of the coating film, it was processed at the heating temperature of 90°C, for the heating time of 3 minutes and 5 minutes respectively. After the process, the cross cut test (JIS K5600-5-6 adherence (cross-cut method)) was performed within 5 minutes, a surface state thereof was observed with the naked eyes, and evaluated as same as the test example 1. Results thereof are illustrated in Table 2 together with a layer constitution on the glass plate.

### (Test Example 3: Ultraviolet and Infrared Absorption Film + TriO₂ Layer)

There was dissolved tetraisopropyltitanate (manufactured by Matsumoto Fine Chemical Co., Ltd., Orgatics TA-10 (brand name)) in dehydrated butyl acetate (Kanto Chemical Co., Inc. in extra-pure grade) to be a concentration of 3 mass%, and an overcoat layer forming composition 3 was manufactured. A folded Kimwipe was immersed in 1 mL of the overcoat layer forming composition 3, it was wipe-coated at a whole surface on the ultraviolet and infrared absorption film of the obtained glass plate 2 having the functional sol-gel layer, then it was dried at the room temperature (23 ± 2°C, 50 ± 10% Rh) for 3 minutes. After that, the folded Kimwipe was immersed in 1 mL of pure water, then it was wipe-coated, and there was obtained a coating film where a TiO₂ layer (thickness: approximately 1 to 2 nm) was formed at a surface of the ultraviolet and infrared absorption film as the overcoat layer.

The felt was immersed in the primer layer forming composition containing the polyester-based resin as same as the test example 1 and applied at a whole surface on the TiO₂ layer of the coating film, it was processed at the heating temperature of 90°C, for the heating time of 3 minutes and 5 minutes respectively. After the process, the cross cut test (JIS K5600-5-6 adherence (cross-cut method)) was performed within 5 minutes, a surface state thereof was observed with the naked eyes, and evaluated as same as the test example 1. Results thereof are illustrated in Table 2 together with a layer constitution on the glass plate.

### (Test Example 4: Ultraviolet Absorption Film (without Overcoat Layer))

The felt was immersed in the primer layer forming composition containing the polyester-based resin as same as the test example 1 and applied at a whole surface on the ultraviolet absorption film of the obtained glass plate 1 having the functional sol-gel layer, it was processed at the heating temperature of 70°C, for the heating time of 1 minute, 3 minutes, and 5 minutes respectively. After the process, the cross cut test (JIS K5600-5-6 adherence (cross-cut method)) was performed within 5 minutes, a surface state thereof was observed with the naked eyes, and evaluated as same as the test example 1. Results thereof are illustrated in Table 2 together with a layer constitution on the glass plate.

Here, ultraviolet absorption performances (TuV: 0.3% or less) of the glass plates each having the coating film obtained by the test example 1 and the test example 4 were equivalent. Besides, as for the glass plates each having the coating film obtained by the test example 2 and the test example 3 have ultraviolet absorption performance (Tuv: 0.3% or less) and infrared absorption performance (transmittance at 1550 nm of 30% or less) which were equivalent to the glass plate having the coating film which had only the ultraviolet and infrared absorption film on the glass plate.

### (Reference Examples 1 to 3)

The felt was immersed in the primer layer forming composition containing the polyester-based resin as same as the test example 1 and applied at a whole surface on a glass substrate (manufacture by Asahi Glass Co., Ltd. as same as the above, common name UVFL), it was processed at the heating temperature of 70°C, for the heating time of 1 minute, 3 minutes, and 5 minutes respectively (reference example 1). After the process, the cross cut test (JIS K5600-5-6 adherence (cross-cut method)) was performed within 5 minutes, a surface state thereof was observed with the naked eyes, and evaluated as same as the test example 1. Results thereof are illustrated in Table 2.

Besides, the same operations as the reference example 1 were performed other than the heating temperature of the reference example 1 was changed to 80°C (reference example 2) or 90°C (reference example 3), and evaluations were respectively performed as same as the test example 1. Results are illustrated in Table 2.

**[Table 1]**

| Class | Description | Area of peeling (%) |
|---|---|---|
| 0 | An edge of a cut is completely smooth, and there is no peeling in any mesh of grid. | 0% |
| 1 | Small peeling of a coating film is observed at an intersection of a cut. Influence at a cross cut part does not obviously exceed 5%. | Over 0% and 5% or less |
| 2 | A coating film is peeled off along an edge of a cut and/or at an intersection. Influence at a cross cut part is obviously over 5% but does not exceed 15%. | Over 5% and 15% or less |
| 3 | Large peeling of a coating film occurs partially or totally along an edge of a cut and/or various parts of a mesh are partially or totally peeled off. Influence at a cross cut part is obviously over 15% but does not exceed 35%. | Over 15% and 35% or less |
| 4 | Large peeling of a coating film occurs partially or totally along an edge of a cut and/or a few parts of a mesh are partially or totally peeled off. Influence at a cross cut part is obviously over 35% but does not exceed 65%. | Over 35% and 65% or less |
| 5 | A degree of peeling exceeds a class 4. | Over 65% and 100% or less |

**[Table 2]**

| | Functional sol-gel layer | Overcoat layer | Resin primer curing conditions and cross cut test | | | |
|---|---|---|---|---|---|---|
| | | Coating material (3 mass%) | Heating temperature | Time | | |
| | | | | 1 minute | 3 minutes | 5 minutes |
| Test example 1 | Ultraviolet absorption film | SiO₂ layer | 90°C | Class 1 | Class 1 | Class 1 |
| | | Tetraisocyanatesilane | | | | |
| Test example 2 | Ultraviolet and infrared absorption film | ZrO layer | 90°C | - | Class 1 | Class 1 |
| | | n-propylzirconate | | | | |
| Test example 3 | Ultraviolet and infrared absorption film | TiO₂ layer | 90°C | - | Class 1 | Class 1 |
| | | Tetraisopropyltitanate | | | | |
| Test example 4 | Ultraviolet absorption film | - | 70°C | Class 5 | Class 5 | Class 5 |
| Reference example 1 | None | - | 70°C | Class 1 | Class 1 | Class 1 |
| Reference example 2 | None | - | 80°C | Class 1 | Class 1 | Class 1 |
| Reference example 3 | None | - | 90°C | Class 1 | Class 1 | Class 1 |

### [Example 1]

There was manufactured a vehicle window member with a window frame where an ultraviolet absorption film, an overcoat layer (SiO₂ layer), and a primer layer are formed in this order on a tempered glass plate having a black ceramic layer, and a window frame was arranged by injection molding as described below.

A surface of the tempered glass plate (Tv: 73.7%, Tuv: 10.0%, transmittance of light with the wavelength of 380 nm: 31.5%, 50 cm in length, 30 cm in width, and 3.5 mm in thickness, manufactured by Asahi Glass Co., Ltd., common name UVFL) having the black ceramic layer which was formed in a frame state with a width of 40 mm at a whole of a peripheral edge part of one principle surface was cleaned by an cerium oxide. On the principle surface of the tempered glass having the black ceramic layer, 20 mL of the obtained liquid composition 1 was applied by the flow coating method, and it was heated in the atmosphere, at 180°C for 30 minutes. A glass plate 3 having a functional sol-gel layer which has the functional sol-gel layer (ultraviolet absorption film) with a thickness of 3.5 µm at the whole surface of one principle surface of the tempered glass having the black ceramic layer was thereby obtained.

A folded Kimwipe was immersed in 1 mL of the overcoat layer forming composition 1 as same as one used in the test example 1, it was wipe-coated at a whole surface on the ultraviolet absorption film of the obtained glass plate 3 having the functional sol-gel layer, then it was dried at the room temperature (23 ± 2°C, 50 ± 10% Rh) for 3 minutes. After that, the folded Kimwipe was immersed in 1 mL of pure water, then it was wipe-coated, and there was obtained a coating film where an SiO₂ layer (thickness: approximately 1 to 2 nm) was formed at a surface of the ultraviolet absorption film as the overcoat layer.

A felt was immersed in the primer forming composition containing the polyester-based resin and applied on the SiO₂ layer of the coating film in a frame state with a width of 40 mm from an outer periphery of an arrangement region toward inside, it was processed at the heating temperature of 90°C, for the heating time of 3 minutes to form the primer layer (thickness: approximately 10 µm), then polyvinyl chloride (manufactured by Riken Technos Corporation, part number AM7550) was injection molded on the primer layer such that an arrangement region was approximately the same, and a vehicle window member with a window frame having a window frame in one-sided molding type was obtained. Then a hand peel test where an injection molded part is pulled with hand to check whether or not peeling occurs is performed within 1 minute after the molding as for the vehicle window member with the window frame. As a result, peeling was not recognized.

### [Comparative Example 1]

A vehicle window member with a window frame having a window frame in a one-sided molding type of a comparative example was obtained exactly as same as the example 1 except that the overcoat layer is not provided in the example 1. The hand peel test as same as the example 1 was performed within 1 minute after the molding as for the vehicle window member with the window frame, then peeling was recognized.

There is provided a vehicle window member with a window frame where the window frame is arranged with sufficient adhesiveness at a vehicle-window-use transparent plate-shaped body which is made to be high functioned by having a functional sol-gel layer.

## Claims

1. A vehicle window member with a window frame, comprising:
a vehicle-window-use transparent plate-shaped body;
a window frame made of a thermoplastic resin arranged at a region including a peripheral edge part of at least one principle surface among a plate-shaped body end part region consisting of peripheral edge parts of both principle surfaces and a side surface part of the transparent plate-shaped body;
a functional sol-gel layer arranged at one of the principle surfaces of the transparent plate-shaped body where the window frame is arranged, so that the functional sol-gel layer is partially overlapped with the region where the window frame is arranged and an overlapped part of the functional sol-gel layer is arranged between the window frame and the transparent plate-shaped body;
a primer layer arranged at substantially the same region as an arrangement region of the window frame at the transparent plate-shaped body side of the window frame to be adjacent to the window frame; and
an overcoat layer mainly constituted of an oxide of at least one kind of element selected from silicon, titanium, zirconium, and zinc, and which is arranged between the functional sol-gel layer and the primer layer to include a region where both are overlapped.

2. The vehicle window member with the window frame according to claim 1,
wherein the oxide is an oxide formed by a hydrolysis and condensation reaction of a hydrolyzable compound of at least one kind of element selected from silicon, titanium, zirconium, and zinc.

3. The vehicle window member with the window frame according to claim 2,
wherein the hydrolyzable compound is a tetrafunctional hydrolyzable silicon compound and/or polysilazane.

4. The vehicle window member with the window frame according to any one of claims 1 to 3, further comprising:
a black ceramic layer arranged at the peripheral edge part of at least one principle surface of the transparent plate-shaped body to hide an inner edge of the window frame.

5. The vehicle window member with the window frame according to any one of claims 1 to 4,
wherein a thickness of the overcoat layer is 1 to 500 nm.

6. A manufacturing method of the vehicle window member with the window frame according to any one of claims 1 to 5, comprising the following steps (1) to (5);
a step (1) of forming a functional sol-gel layer at a predetermined region on at least one principle surface of the transparent plate-shaped body,
a step (2) of forming an overcoat layer by using an overcoat layer forming composition containing a hydrolyzable compound of at least one kind of element selected from silicon, titanium, zirconium, and zinc and a solvent at an arrangement region of the overcoat layer on the functional sol-gel layer,
a step (3) of obtaining a vehicle-window-use stack precursor by applying a primer layer forming composition containing a primer component and a solvent at an arrangement region of the primer layer including on the overcoat layer, after the step (2),
a step (4) of obtaining a vehicle-window-use stack by heating the vehicle-window-use stack precursor, after the step (3), and
a step (5) of arranging the window frame by injection molding at a predetermined region of the vehicle-window-use stack, after the step (4).

7. The manufacturing method according to claim 6,
wherein a heating temperature of the vehicle-window-use stack precursor in the step (4) is 80°C or more.
